# EUROPEAN PATENT APPLICATION

(11) **EP 2 403 261 A1**
(43) Date of publication of application: **04.01.2012**
(21) Application number: 11170707.1
(22) Date of filing: 21.06.2011
(51) Int. Cl.: H04N 21/2362, H04N 21/434

(54) **Method and system for discovering service components in a broadcast system**

(30) Priority: 30.06.2010 US 360245 P
(71) Applicant: NOKIA CORPORATION, 02150 Espoo (FI)
(72) Inventor: Väre, Jani, 20780 Kaarina (FI); Alamaunu, Jyrki, 20720 Turku (FI); Tupala, Miika, 20320 Turku (FI)
(74) Representative: Nokia Corporation

(57) **Abstract**

Apparatuses and methods may include generating layer one parameters of a sub physical layer pipe within a physical layer pipe, generating an electronic service guide table that associates a service with a uniform resource identifier, generating a service association table that associates the uniform resource identifier with a component identifier, generating a link layer pipe association section table that associates the component identifier with an index, and causing transmission of the layer one parameters, the electronic service guide table, the service association table, and the link layer pipe association section table.

## Description

### BACKGROUND

Broadcast or multicast systems support the delivery of data services such as digital video broadcasting (DVB). Broadcast or multicast transmission may consist of frames with a preamble with P1 and P2 symbols that are used for Layer 1 (L1) signaling. The majority of the data symbols may be allocated for different physical layer pipes (PLP) that carry service data. As is known in the art, a PLP often denotes a physical layer time division multiplex (TDM) channel that is carried by specified slices, where a slice is a group of cells from a single PLP, which before frequency interleaving, is transmitted on active Orthogonal Frequency Division Multiplexing (OFDM) cells with consecutive addresses over a single radio frequency (RF) channel. Different PLPs may carry data that has been modulated using schemes based on different constellations or other modulation parameters, where data in different PLPs may be coded using different Forward Error Correction (FEC) schemes. The broadcast or multicast systems may consist of many service components, including audio and multiple video components. Multiple video components, for example, to provide different quality levels through scalable video coding, may be used when delivering a service to a user. Furthermore, synchronizing the components may be important to enhance the user experience.

The slices of the PLPs, auxiliary streams, and dummy cells may be mapped into the symbols of the frame. Each frame may start with a P1 symbol followed by one or more P2 symbols. The L1 pre- and L1 post signaling may first be mapped into P2 symbol(s). L1-pre signaling may denote signaling carried in the P2 symbols having a fixed size, coding and modulation, including basic information about the system as well as information needed to decode the L1-post signaling, while L1-post signaling may denote signaling carried in the P2 symbol carrying more detailed L1 information about the system and the PLPs. PLPs, auxiliary streams, and dummy data cells fill the remaining cells in the frame.

### BRIEF SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In some aspects, apparatuses, methods, and computer readable media may include generating layer one parameters of a sub physical layer pipe within a physical layer pipe, generating an electronic service guide table that associates a service with a uniform resource identifier, generating a service association table that associates the uniform resource identifier with a component identifier, generating a link layer pipe association section table that associates the component identifier with an index, and causing transmission of the layer one parameters, the electronic service guide table, the service association table, and the link layer pipe association section table.

In some aspects, apparatuses, methods, and computer readable media may include processing, by a processor, an electronic service guide table to identify a uniform resource identifier associated with a service, processing a service association table to identify a component identifier associated with the uniform resource identifier, processing a link layer pipe association section table to identify an index associated with the component identifier, identifying a physical location of a sub physical layer pipe within a physical layer pipe of a link layer pipe frame using the index, processing layer one parameters of the link layer pipe frame to identify decoding parameters of the sub physical layer pipe, and decoding the sub physical layer pipe using the decoding parameters.

### BRIEF DESCRIPTION OF THE DRAWINGS

Certain embodiments are illustrated by way of example and not limited in the accompanying figures in which like reference numerals indicate similar elements and in which:

FIG. 1 is a block diagram of an example communication network in which one or more embodiments may be implemented.

FIG. 2 is a block diagram of an example communication device according to one or more aspects described herein.

FIG. 3 illustrates an example data model for network transmissions according to one or more aspects described herein.

FIG. 4 illustrates a broadcast network in which services and service components are transmitted using physical layer transmission channels according to one or more aspects described herein.

FIG. 5 illustrates an example transmission protocol and structure in which LLP frames are transmitted in T2 frames of a DVB-T2 protocol.

FIG. 6 depicts example content of an L1 configurable signaling format.

FIGs. 7a-b and 8a-b depict example signaling structures for PLP component signaling sent in conjunction with the example content shown in Figure 6.

FIG. 9 illustrates an example mapping of service L2 signaling and physical signaling.

FIG. 10 illustrates an example method for communicating signaling parameters.

FIG. 11 illustrates an example method for processing of signaling parameters to decode PLPs.

### DETAILED DESCRIPTION

In the following description of the various embodiments, reference is made to the accompanying drawings, which form a part hereof, and in which are shown by way of illustration various embodiments in which the invention may be practiced. It is to be understood that other embodiments may be utilized and structural and functional modifications may be made without departing from the scope of the present invention.

The example embodiments provide signaling for mapping service components with sub-PLPs of a link layer pipe (LLP) frame. Link layer pipes may also be referred to as logical layer pipes. In Digital Video Broadcasting - Second Generation Terrestrial (DVB-T2), the different services or service components are transmitted through physical layer pipes (PLP). A service may include several components that together form the service. Service components can be also shared between services. A typical example of this is a teletext service or other non-real time service which uses the same service components for all channels from the same service provider. The shared non-real time service component may be transmitted in a dedicated PLP that is the same for all channels.

Audio/Video (A/V) content is another example of component transmission. For scalable video coding, a service may include audio, base layer video, and enhancement layer video. The base layer video may have lower resolution than the enhancement layer video. The AV components of each service might not be shared with other services, and may be sufficiently synchronous with each other to avoid problems at a receiver. The example embodiments permit transmission of multiple service components within the same PLP as well as different robustness levels for the components. Sub PLPs may be defined within the same PLP to accommodate multiple service components. The example embodiments provide discovery of sub PLP content to permit filtering (for example discarding) of unneeded service components prior to decoding (for example, by a forward error correction (FEC) decoder) to conserve memory space and processing power.

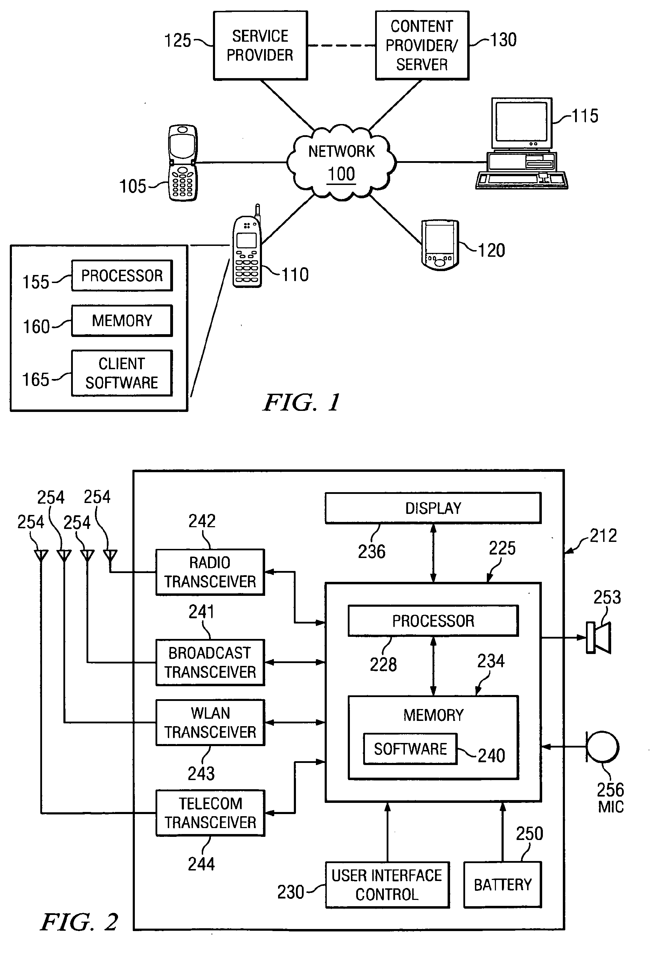

FIG. 1 illustrates an example communication network through which various inventive principles may be practiced. A number of computers and devices including mobile communication device 105, mobile phone 110, personal digital assistant (PDA) or mobile computer 120, personal computer (PC) 115, service provider 125 and content provider/server 130 may communicate with one another and with other devices through network 100. Network 100 may include wired and wireless connections and network elements, and connections over the network may include permanent or temporary connections. Communication through network 100 is not limited to the illustrated devices and may include additional mobile or fixed devices such as a video storage system, an audio/video player, a digital camera/camcorder, a positioning device such as a GPS (Global Positioning System) device or satellite, a television, an audio/video player, a radio broadcasting receiver, a set-top box (STB), a digital video recorder, remote control devices and any combination thereof.

Although shown as a single network in FIG. 1 for simplicity, network 100 may include multiple networks that are interlinked so as to provide internetworked communications. Such networks may include one or more private or public packet-switched networks, for example the Internet, one or more private or public circuit-switched networks, for example a public switched telephone network, a cellular network configured to facilitate communications to and from mobile communication devices 105 and 110, for example through use of base stations, mobile switching centers, etc., a short or medium range wireless communication connection, for example Bluetooth®, ultra wideband (UWB), infrared, WiBree, wireless local area network (WLAN) according to one or more versions of Institute of Electrical and Electronics Engineers (IEEE) standard no. 802.11), or a highspeed wireless data network such as Evolution-Data Optimized (EV-DO) networks, Universal Mobile Telecommunications System (UMTS) networks, Long Term Evolution (LTE) networks or Enhanced Data rates for GSM Evolution (EDGE) networks. Devices 105-120 may use various communication protocols such as Internet Protocol (IP), Transmission Control Protocol (TCP), Simple Mail Transfer Protocol (SMTP) among others known in the art. Various messaging services such as Short Messaging Service (SMS) and/or Multimedia Message Service (MMS) may also be included.

Devices 105-120 may be configured to interact with each other or other devices, such as content provider/server 130 or service provider 125. In one example, mobile device 110 may include client software 165 that is configured to coordinate the transmission and reception of information to and from content provider/server 130. In one arrangement, client software 165 may include application or server specific protocols for requesting and receiving content from content provider/server 130. For example, client software 165 may comprise a Web browser or mobile variants thereof and content provider/server 130 may comprise a web server. Billing services (not shown) may also be included to charge access or data fees for services rendered. In one arrangement where service provider 125 provides cellular network access, for example acts as a wireless service provider, client software 165 may include instructions for access and communication through the cellular network. Client software 165 may be stored in computer-readable memory 160 such as read only, random access memory, writeable and rewriteable media and removable media in device 110 and may include instructions that cause one or more components - for example, processor 155, a transceiver, and a display - of device 110 to perform various functions and methods including those described herein.

FIG. 2 illustrates an example computing device such as mobile device 212 that may be used in network 100 of FIG. 1. Mobile device 212 may include a controller 225 connected to a user interface control 230, display 236 and other elements as illustrated. Controller 225 may include one or more processors 228 and memory 234 storing software 240, for example client software 165. Mobile device 212 may also include a battery 250, speaker 253 and antenna 254. User interface control 230 may include controllers or adapters configured to receive input from or provide output to a keypad, touch screen, voice interface - for example via microphone 256, function keys, joystick, data glove, mouse and the like.

Computer executable instructions and data used by processor 228 and other components of mobile device 212 may be stored in a storage facility such as memory 234. Memory 234 may comprise any type or combination of read only memory (ROM) modules or random access memory (RAM) modules, including both volatile and nonvolatile memory such as disks. Software 240 may be stored within memory 234 to provide instructions to processor 228 such that when the instructions are executed, processor 228, mobile device 212 and/or other components of mobile device 212 are caused to perform various functions or methods such as those described herein. Software may include both applications and operating system software, and may include code segments, instructions, applets, pre-compiled code, compiled code, computer programs, program modules, engines, program logic, and combinations thereof. Computer executable instructions and data may further be stored on computer readable media including electrically erasable programmable read-only memory (EEPROM), flash memory or other memory technology, CD-ROM, DVD or other optical disk storage, magnetic cassettes, magnetic tape, magnetic storage and the like.

Mobile device 212 or its various components may be configured to receive, decode and process various types of transmissions including digital broadband broadcast transmissions that are based, for example, on the Digital Video Broadcast (DVB) standard, such as DVB-T2, Digital Video Broadcasting - Handheld (DVB-H), DVB-H+ (hybrid satellite/terrestrial architecture), or Digital Video Broadcasting - Multimedia Home Platform (DVB-MHP), through a specific broadcast transceiver 241. Other digital transmission formats may alternatively be used to deliver content and information regarding availability of supplemental services. Additionally or alternatively, mobile device 212 may be configured to receive, decode and process transmissions through FM/AM Radio transceiver 242, wireless local area network (WLAN) transceiver 243, and telecommunications transceiver 244. Transceivers 241, 242, 243 and 244 may, alternatively, include individual transmitter and receiver components.

Although the above description of FIG. 2 generally relates to a mobile device, other devices or systems may include the same or similar components and perform the same or similar functions and methods. For example, a stationary computer such as PC 115 (FIG. 1) may include the components or a subset of the components described above and may be configured to perform the same or similar functions as mobile device 212 and its components.

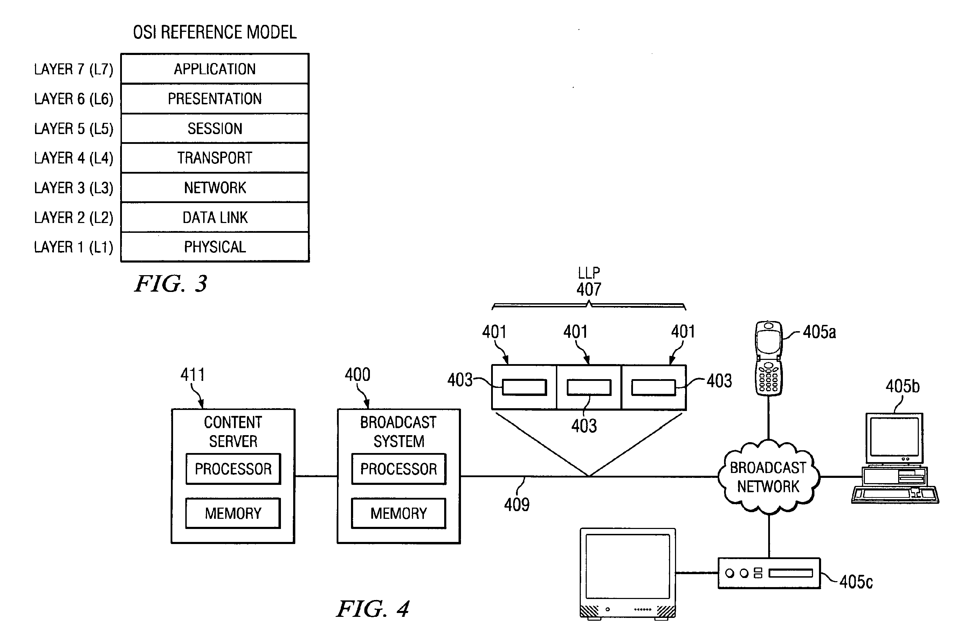

According to some digital video broadcasting protocols, components that make up a particular service like a content program or an interactive function are mapped through a physical layer pipe (PLP). A physical layer, as used herein, generally refers to a portion of a network protocol that is configured to define hardware-specific operations for effecting the transmission or reception of electronic signals over a data network. The physical layer is configured to facilitate the transmission of raw bits from a source to a destination. The physical layer may be configured to specify frequencies, voltages, bit rates and the like for transmission of data. The Open Systems Interconnection (OSI) Reference Model, for example, provides for a layered communication architecture including a physical layer. FIG. 3 illustrates one representation of an OSI Reference Model.

A PLP generally refers to a transmission channel between a source and a destination node defined at the physical layer level. The physical layer may define multiple channels - pipes - through which raw bits representative of the data such as broadcast data may be sent. For example, different broadcast services and data associated therewith may be mapped to different physical layer pipes and made available therethrough. Accordingly, the physical layer may be configured to identify the appropriate transmission channel for a series of bits corresponding to a particular service and transmit the data through the identified channel or pipe. In a broadcast arrangement, a PLP may be established between a source and multiple destinations. In one example, a PLP may correspond to a physical layer time-division multiplexed channel that is carried by specified slices of a transmission stream (for example, a DVB-T2 stream). When an end-user device wishes to access a component of a particular service, the end-user device may identify the corresponding PLP or PLPs and access the service data therethrough. In the broadcast scenario, a receiving device may listen for the particular PLP or PLPs carrying the desired service or services.

FIG. 4 illustrates a broadcast network in which services and service components, for example content provided from content server 411, are transmitted through multiple PLPs 401 from a broadcast system 400, where each of the PLPs 401 are configured to carry a different broadcast service component, for example, components 403. The broadcast system 400 and the content server 411 each may include at least one processor and at least one memory storing computer executable instructions that, when executed, cause the broadcast system 400 and/or the content server 411 to perform the operations described herein. PLPs 401 may be defined as segments of a transmission stream 409 that together make up a transmission channel for a particular one of service components 403. Each of components 403 may be mapped to a different one of PLPs 401 to provide the ability to share service components 403 across services. Alternatively or additionally, two components may be mapped to the same pipe depending on a desired configuration (not shown).

Pipes 401 corresponding to components of a single service may be identified by combining PLPs 401 into a logical grouping 407 - into a link layer pipe - that is associated with a service. LLPs generally refer to logical associations such as mappings that link a service or service components to a PLP. LLPs may be defined using various data structures such as tables, lists and the like. PLPs 401 may be identified for accessing components 403 of a service by determining the logical grouping or LLP 407 associated with that service and examining PLP parameters specified thereby. In one example, LLP 407 may be identified in a service descriptor configured to advertise available services to network devices 405 - cell phone 405a, computer 405b and set-top box 405c. LLP identification information may be carried in a packet header of the broadcast transmission stream 409. Alternatively or additionally, LLP information - for example LLP identifiers - for each service may be specified in electronic service guide data. Thus, upon receiving the packet header and/or electronic service guide data, a receiving device such as cell phone 405a may extract LLP information to identify components of a service and their associated PLPs. LLP signaling is described in further detail herein.

Current PLP architectures and data models generally require that all service components for a service be mapped to a single PLP. Accordingly, the sharing of a service component among multiple services and the application of different functionalities to different service components of a single service, for example, in scenarios where functionalities are applied on a per-PLP basis, might not be possible. For example, the separate layers of a Scalable Video Codec (SVC) may be configured as different components of a service, each layer of the SVC being mapped to the same PLP. Because the layers of the service are mapped to the same PLP, it might not be possible to apply different functionalities such as error detection or correction to each separate layer of the SVC because the functionalities might generally be applied across an entire PLP, not for each service component in a PLP. Furthermore, in a scenario or a data model requiring mapping all service components for a service to a single PLP, it may not be possible to receive only a subset of the service components of a service. As an example, a service may comprise a video component, and two audio components in different languages, all mapped to a single PLP. Because both audio components - providing similar information in different languages - are mapped to the same PLP, it might not be possible to receive only one of the audio components. The signaling described herein may associate services to particular sub PLPs within an LLP frame, thereby permitting a receiver to only process PLPs, or sub PLPs, of interest, without having to process the remaining PLPs.

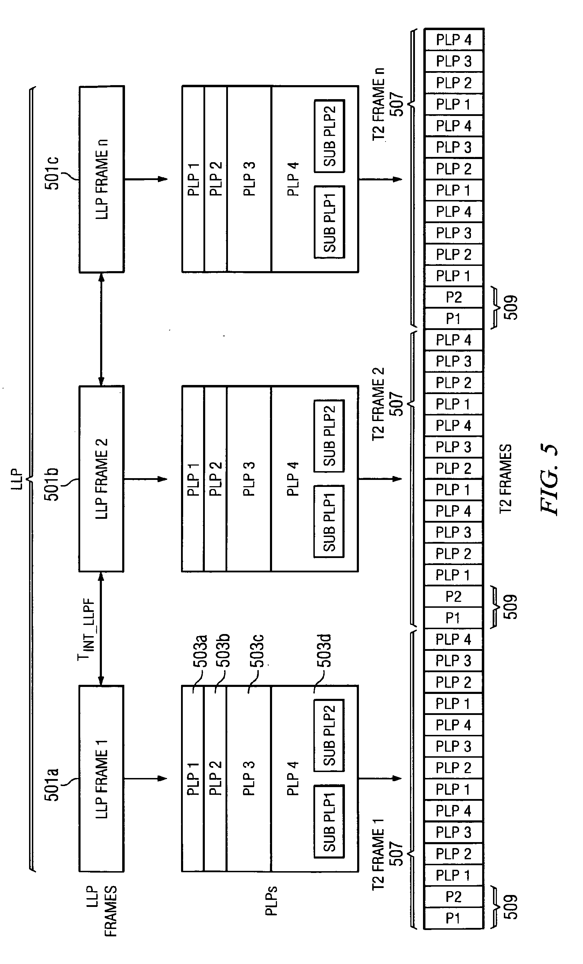

FIG. 5 illustrates an example transmission protocol and multiplex structure in which LLP frames of an LLP may be transported by T2 frames of a DVB-T2 protocol. An LLP may comprise multiple frames 501, which may be used to allow for the fair division of resources in a broadcast transmission stream. Accordingly, a first frame 501a of an LLP may be transmitted at time T1, while a second frame 501b may be transmitted at time T2 and a third frame 501c may be transmitted at time T3. The interval between the transmission of each of the frames 501 may be defined by a parameter T_{INT_LLPF}. T_{INT_LLPF} may define the amount of time between two consecutive frames, for example frames 501a and 501b, of a particular LLP. During the time between frames of LLP, frames of other LLPs may be transmitted. Accordingly, transmission bandwidth and resources may be divided amongst multiple LLPs. Furthermore, to avoid backlog and increase transmission and processing efficiency, a transmission protocol may adhere to the equation T_{OUT_LLP} ≤ T_{INT_LLPF}. T_{OUT_LLP} may indicate an amount of time required for a receiver to process an LLP frame 501. This equation allows for LLP frame 501a, for example, to be consumed by the receiver prior to receiving another LLP frame 501c. Additionally, a size of each LLP frame 501 may be required to be less than or equal to the buffer size of the receiver. Again, such a rule may be implemented to reduce potential for backlog and network slowdown. Alternatively or additionally, gaps may be scheduled for one or more LLP frame slots to allow for power saving. For example, LLP frame 501b may be transmitted 2*T_{INT_LLPF} after the transmission LLP frame 501a so that a receiver may power down during the slot provided T_{INT}__{LLPF} after the transmission of LLP frame 501a.

In one or more configurations, LLP frames may vary in size from frame to frame. LLP frame size may be defined as BS_{LLPF} (buffer size of LLP frame). This frame size may be, for example, the size of the largest LLP frame within an LLP. A receiver may determine whether it has buffering capacity to receive an entire LLP based on the BS_{LLPF} and a time between two consecutive frames of a LLP, indicated for example by T_{INT_LLPF} as described above. Additionally or alternatively, BS_{LLPF} may be required to be less than or equal to B_{R} for reception of a LLP. The receiver buffer may be of a specified size B_{R}.

Each LLP frame 501 may encompass a set of PLPs 503 to which service components of a corresponding service are mapped. PLPs, as illustrated, may be defined by specified slots or slices and packet sizes in a transmission stream. For example, PLP 1 might be defined as occupying the 1^{st}, 5^{th}, and 9^{th} slices in a payload portion of a T2 frame. A PLP such as PLP 503c may occupy twice the number of available slots or slices if, for example, PLP 503c may be twice as large as each of PLP 503a and 503b. A PLP such as PLP 503d may be subdivided and transport two or more Sub PLPs, such as Sub PLP1 and Sub PLP2. A remainder 509 of each T2 frame 507 may be apportioned to header data such as P1 and P2 and other LLP frames of other services.

During transmission of one or more of the other portions 509 of T2 frames 507, a receiver interested in only the service corresponding to LLP frames 501 may shut down various components for power saving purposes. For example, a receiver may be awake to inspect a frame header including preamble symbols (for example, P1 and P2) of the stream and shut down thereafter until relevant PLPs are to be received. Preamble symbols may be used during the initial signal scan for fast recognition of a signal (for example, T2), for which just the detection of P1 is enough. Preamble symbols may also be used to identify the preamble itself as a specific type of preamble (for example, a T2 preamble). Additionally, preamble symbols may be used to signal basic transmission parameters that are needed to decode the rest of the preamble which can help during the initialization process. P1 may also be used to enable the receiver to detect and correct frequency and timing synchronization.

Alternatively or additionally, a remainder of T2 frames 507 not occupied by PLPs 503 might not include LLP frames for other services and may instead be configured to provide power conservation or processing time for the receiver. The amount of time between each of LLP frames 501 may be T_{INT_LLPF} to provide sufficient time for a receiver to consume the previously received LLP frame.

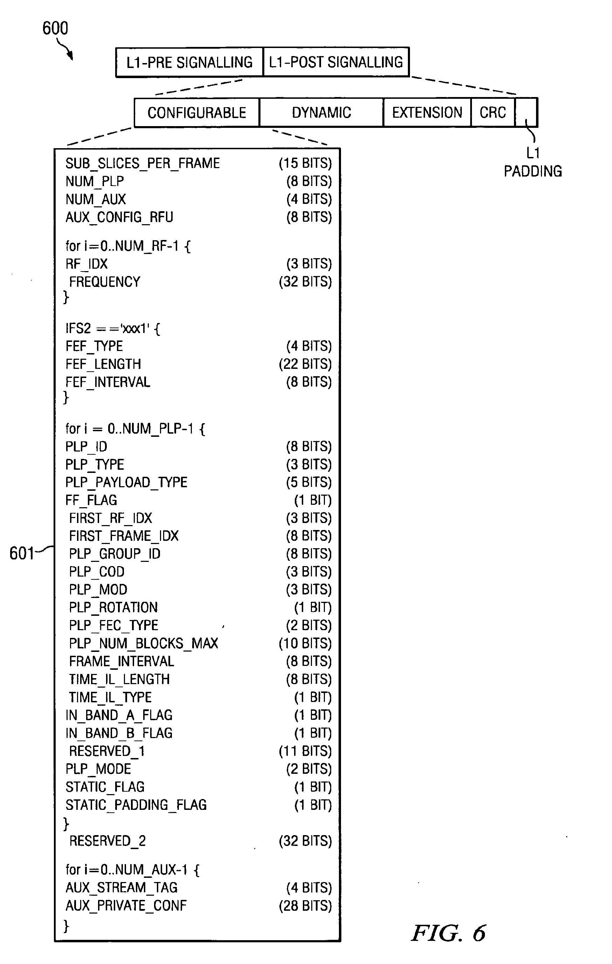

Figures 6-9 provide a signaling structure to permit a receiver to identify and decode only PLPs and sub PLPs of interest. The remaining PLPs and sub PLPs may be discarded. The signaling structure may provide information using both layer one L1 and layer two L2 signaling to identify PLPs and/or sub PLPs of interest. L2 signaling may be used to specify a physical location of a sub PLP within an LLP frame 501, and L1 signaling may be used to define decoding parameters (for example modulation and coding parameters) for the sub PLP at the physical location identified by the L2 signaling.

Figure 6 shows exemplary content 600 of a L1 configurable signaling format. The content 600 may be consistent with DVB-T2 standards. With some embodiments, content 600 includes general parameters that are common for all PLPs as well as PLP- and sub PLP-specific parameters (associated with a PLP designated by PLP_ID field 601) that are signaled in a PLP loop. With some examples, additional signaling parameters may be included in an L1 extension signaling block. In addition to configurable signaling, content 600 may also include L1 dynamic and extension fields.

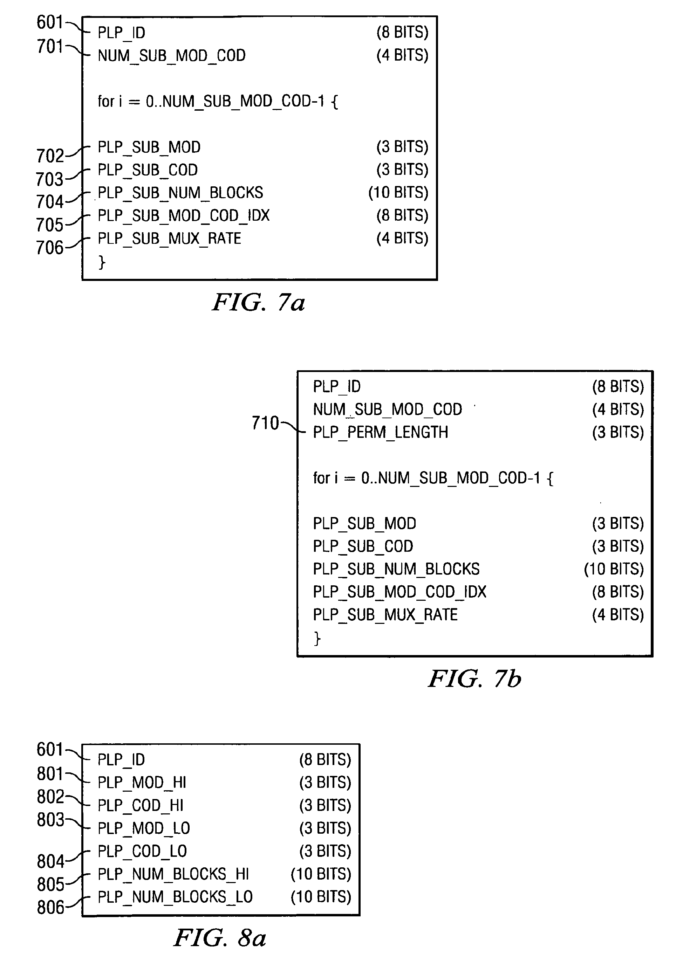

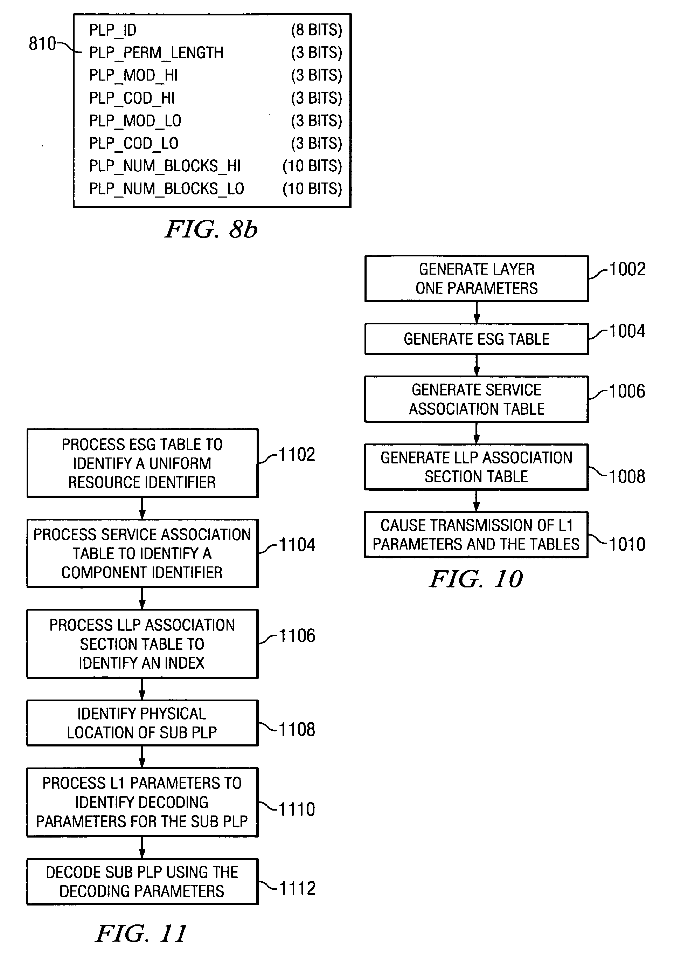

Exemplary embodiments for the signaling structures for the PLP component signaling are shown in Figures 7a, 7b, 8a, and 8b, which may be included in an LLP frame 501 with content 600 as shown in Figure 6. With some exemplary embodiments, as shown in Figure 7a, the signaling structure may incorporate a loop structure for the PLP components, including modulation, code rate, a number of FEC blocks per interleaving frame, and indexing for each PLP component. For other embodiments, as shown in Figure 8a, the signaling structure may incorporate a simplified structure, in which only two PLP components may be carried within each PLP, which is designated as high robustness and low robustness PLP components.

With some exemplary embodiments, signaling may be transmitted within the DVB configurable signaling. In other embodiments, some of the signaling fields may be transmitted in DVB dynamic signaling, for example, to support variable bit rates for the PLP components. The L1 post-signaling may contain parameters which provide sufficient information for the receiver to decode the desired physical layer pipes. The L1 post-signaling may further consist of two types of parameters, which are configurable and dynamic. The configurable parameters may remain the same for the duration of one superframe (one superframe carries always more than one T2 frame), whilst the dynamic parameters provide information which may be specific for the current frame. The values of the dynamic parameters may change during the duration of one superframe, while the size of each field may remain the same.

Referring to Figure 7a, some exemplary embodiments support PLP component signaling, in which one or more PLP components are announced within a loop structure according to one or more aspects described herein. PLP_ID field 601 may comprise an 8-bit field that may be consistent with a traditional system. NUM_SUB_MOD_COD field 701 comprises a 4-bit field that defines the number of modulation (MOD) and code rate (COD) parameter combinations. Field 701 determines the length of the loop followed by PLP_SUB_MOD field 702, which is a field that indicates the modulation used by the associated PLP component. The modulation may be specified by signaling information per PLP in accordance with Table 1.

**Table 1: Example of signaling format for the modulation signaled within PLP_SUB_MOD-field**

| Value | Modulation |
|---|---|
| 000 | QPSK |
| 001 | 16-QAM |
| 010 | 64-QAM |
| 011 | 256-QAM |
| 100 to 111 | reserved future use |

PLP_SUB_COD field 703 may comprise a field that indicates the code rate used by the associated PLP component and may be specified by signaling information in accordance with Table 2.

**Table 2: Example of signaling format for the code rates signaled within PLP_SUB_COD-field**

| Value | Code rate (see note) |
|---|---|
| 000 | 1/2 |
| 001 | 3/5 |
| 010 | 3/5B or 2/3 |
| 011 | 2/3 or 3/4 |
| 100 | 3/4 or 4/5 |
| 101 | 4/5 or 5/6 |
| 110 | 5/6 or reserved |
| 111 | reserved future use |

PLP_SUB_NUM_BLOCKS field 704 may comprise a 10-bit field that indicates the number of FEC blocks contained in the current interleaving frame for the current PLP component. PLP_SUB_MOD_COD_IDX field 705 may comprise a field that indicates the index for the PLP component announced within the loop. PLP_SUB_MUX_RATE field 706 may comprise a field that specifies the number of cells read from the associated PLP component. When the value is one for all PLP components, field 706 may not be needed if a default value is used.

Referring to Figure 7b, some exemplary embodiments include PLP component signaling, in which one or more PLP components are announced within a loop structure. While similar to the exemplary embodiments depicted by Figure 7a, PLP_PERM_LENGTH field 710 specifies signalling information for the permutation length. Parameter 710 indicates the output dimension K of serial-to-parallel converter. Because field 710 applies to all PLP components, parameter 710 is located outside the PLP component loop. Because all values may not suitable for K, the different bit combinations may be used to signal predefined permutation lengths, as shown in Table 3.

Figure 8a shows a simplified signaling structure in which only two PLP components may be carried within each PLP, which is designated as high robustness and low robustness PLP components. PLP_MOD_HI field 801, PLP_COD_HI field 802, and PLP_NUM_BLOCKS_HI field 805 correspond to PLP_SUB_MOD field 702, PLP_SUB_COD field 703, and PLP_SUB_NUM_BLOCKS field 704, respectively, for the high robustness PLP component. Similarly, PLP_MOD_LO field 803, PLP_COD_LO field 804, and PLP_NUM_BLOCKS_LO field 806 correspond to PLP_SUB_MOD field 702, PLP_SUB_COD field 703, and PLP_SUB_NUM_BLOCKS field 704, respectively, for the low robustness PLP component.

Figure 8b shows an exemplary embodiment of PLP component signaling, where PLP_PERM_LENGTH 810, which specifies the permutation length, may also be included in signalling for exemplary embodiments with a fixed number of PLP components (for example, two PLP components corresponding to high robustness and to low robustness). With some embodiments, PLP_PERM_LENGTH 810 may comprise three bits and use the assignments shown in Table 3. However, fields 810 may accommodate larger values of K.

**Table 3: Example of signaling format for the permutation length signaled within PLP_PERM_LENGTH-field**

| Value | K |
|---|---|
| 000 | 3 |
| 001 | 5 |
| 010 | 9 |
| 011 | 15 |
| 100 | 27 |
| 101 to 111 | ... |

As previously discussed, the exemplary embodiments shown in Figures 8a and 8b support signaling for two PLP components, in which a first PLP component supports a high robustness and a second PLP component supports a low robustness.

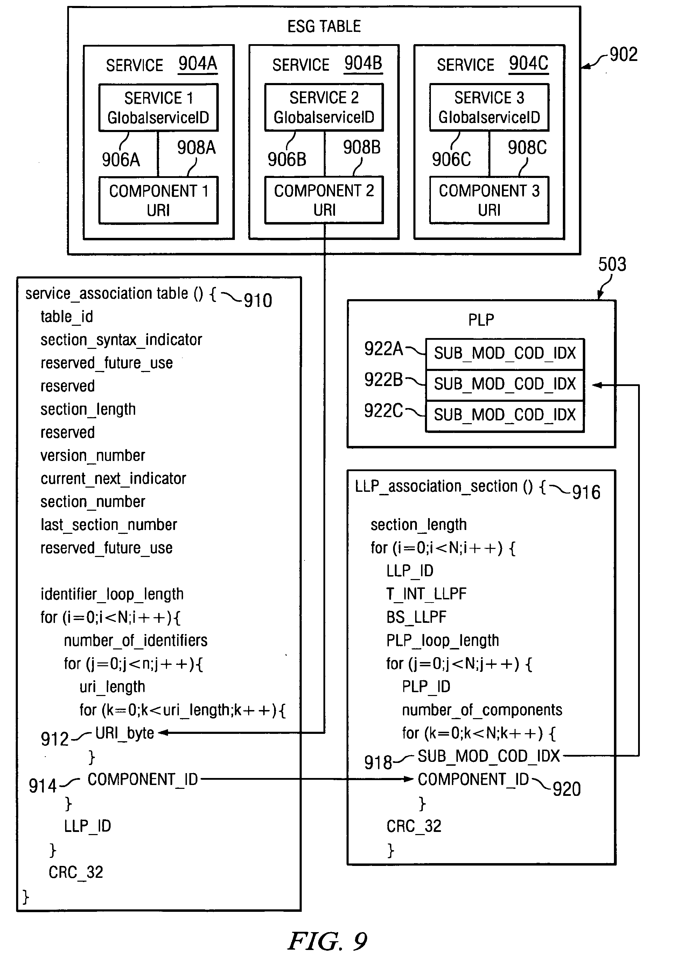

Figure 9 illustrates an example mapping of service L2 signaling and physical signaling. Figure 9 depicts the relationship between an electronic service guide (ESG) table 902, a service association table 910, an LLP association section table 916, and a PLP 503 to permit a receiver to identify a PLP or sub PLP carrying a component of a service of intesest.

The ESG table 902 may include one or more services 904A-C. The services 904 may be Open Mobile Alliance Mobile Broadcast (OMA BCAST) services that may include one or more Internet Protocol (IP) streams and/or User Datagram Protocol (UDP) streams to transport components 908. Each service 906A-C may have a Global service identifier (GlobalserviceID), which may be may be a unique identifier of the service 904. Each service 906 may be associated with one or more components 908 that may respectively transport audio, video, text, etc. Each component 908 may be associated with a uniform resource identifier (URI) to identify information corresponding to the components 908 of the desired service from a service association table 910. The URI may be used in L2 signaling to map service components 908 of each service 904 to a physical domain. Upon identifying a service of interest, such as, for example, by user selection, the receiver may process the URI to identify a URI byte 912 in the service association table 910 corresponding to the desired component 908.

The service association table 910 may include the following parameters.

Table_id: An identifier for a table associating services with service components and a corresponding LLP. A table may include multiple sections, where each section corresponds to a service.

Section_syntax_indicator: The section_syntax_indicator may be a 1-bit field which shall be set to a predefined value, for example to value "1."

Section_Length: A 12-bit field that may specify a number of bytes of a section of the table, starting immediately following the section_length field and including the cyclic redundancy check field CRC_32. A section may refer to a section of a table (for example, a program specific information/service information table), wherein each section may correspond to a different service.

Version_Number: A 5-bit field that may identify a version of the table. The version number may be incremented by 1 when a change in the information carried within the table occurs. Upon reaching a value of 31, the version number may wrap around to 0 upon incrementation.

Current_next_indicator: This may be a 1-bit indicator that, when set to "1" indicates that the currently applicable table is the current version of the table (i.e., sub_table). A value of "0," however, indicates that the currently applicable table is the next version of the table.

Section_number: An 8-bit field that may identify a number of a section, where the section_number of the first section in the table may be "0x00." The section_number may be incremented by 1 with each additional section with the same table_id, service_id, transport_stream_id, and original_network_id. In this example, the table may be structured as a number of segments, where within each segment, the section_number may be incremented by 1 with each additional section. However, a gap in numbering may be permitted between the last section of a segment and the first section of the adjacent segment.

Last_section_number: An 8-bit field that may specify the number of the last section of the sub_table of which the section is a part. The last section number may further be used to determine the number of sections within a table.

Identifier_loop_length: A 12 bit field that may indicate the length of the identifier loop. The first N (i.e., i<N) is the number of URI/COMPONENT_ID pairs (within this section) known by the receiver after parsing the signaling. The second N (i.e., j<N) may be equal to the number of identifiers.

Number_of_identifiers: a field that may identify the number of identifiers associated with a serviceID within one iteration of an identifier loop.

uri_length: an 8-bit field that may specify a length in bytes of a URI.

URI_byte: an 8-bit field, where a string of character (for example, URI_char) fields specifies the URI identifying the service.

COMPONENT_ID: may be a component identifier that may be used as a local index to identify a particular SUB_MOD_COD_IDX in the LLP association section table 916.

LLP_ID: 16 bit identifier that may identify a link layer pipe within the network (for example, a network specified by an identifier such as network_id).

CRC_32: A 32-bit cyclic redundancy check (CRC) that contains the CRC value that gives a zero output of the registers in the decoder.

The LLP association section table 916 may provide an association between LLPs, PLPs and related parameters, and may include the following parameters. The section_length may indicate the number of LLPs. Each LLP may be associated with a set of PLPs, a number of PLPs in the set defined by, for example, the variable PLP_loop_length, which may be a total length of a PLP loop including any internal loops (for example, "for" loops in LLP association section table 916 in FIG. 9). Each LLP may further be identified by an identifier such as LLP_ID. The time between LLP frames in a transmission may be represented by T_INT_LLPF while the size of the largest LLP frame within an LLP may be specified by BS_LLPF. The number_of_components may identify a number of components associated with a particular PLP_ID. The SUB_MOD_COD_IDX may be an index identifying a location of a particular sub PLP within a PLP 503. For example, PLP 503 has three sub PLPs 922A-C in FIG. 9. The PLP loop may include three SUB_MOD_COD_IDX's each corresponding to a particular COMPONENT_ID 914.

The following provides an example of a receiver identifying a particular sub PLP 922 using the ESG table 902, the service association table 910, and the LLP association section table 916. Initially, the receiver may process the ESG table 902 to identify services 904 available in the LLP frames 501. The receiver may receive the ESG table 904 via any type of bearer (for example, application, point-to-point, broadcast, etc.). Each service 904 may be associated one or more components 908 respectively transporting audio, video, text, etc. The receiver may identify a desired service and a URI corresponding to a service component 908 of the desired service. The receiver may then use the URI to identify a URI byte 912. The receiver may process the service association table to identify the COMPONENT_ID 914 corresponding to the URI byte 912. The receiver may then use the COMPONENT_ID 914 as a local index to process the LLP association section table 916 to identify a SUB_MOD_COD_IDX 918. The receiver may use the SUB_MOD-COD_IDX 918 to identify a physical location of the sub PLP 922 within the PLP 503 that corresponds to a component 908 of the desired service 904. For example, the receiver may identify which of the three sub PLPs 922a-c corresponds to the component 908.

Advantageously, the COMPONENT_ID 914 may be used as a local index of the LLP frame 501 and may have only one byte compared to N-bytes long URI. There may be one-to-one mapping between the COMPONENT_ID 914 and the URI. The LLP association section table 916 may also permit changes to the multiplex structure of the LLP frame 501, including the location of a component 908 within the LLP frame 501 without having also to modify the service association table 910. Use of the COMPONENT_ID 914 also permits changes to the physical multiplexing of the PLP 503 without having to adjust the higher level mapping (i.e., mapping within the service association table 910 or the ESG table 902). The COMPONENT_ID 914 also maps the services 904 and their one or more components 908 to a particular physical location with the PLP 503.

The signaling structure discussed above also improves FEC decoding of service components 908 as a receiver has the option to only decode the PLPs and sub PLPs of interest, and not the PLPs transporting the remaining service components. The receiver may discard the service components 908 not selected for decoding, thereby improving processing speed and reducing memory requirements as undesired decoded components do not have to be stored. Reducing memory consumption can lead to lower receiver cost and/or enables a receiver to simultaneously receive multiple services/service components of interest without incurring excess processing by the receiver.

The reception of multiple services in parallel also enables efficient zapping (for example changing from receiving one service to another) between the received services. In an example, the receiver may only decode a base layer video component without also decoding the enhancement layer video component thereby providing the user with a faster zapping experience.

Figure 10 illustrates an example method for communicating signaling parameters. The method may be implemented, for example, by the broadcast system 400 and/or the content server 411 depicted in FIG. 4. In block 1002, the method may include generating layer one L1 parameters of a sub physical layer pipe within a physical layer pipe. In block 1004, the method may include generating an electronic service guide table that associates each service with a uniform resource identifier. In block 1006, the method may include generating a service association table that associates the uniform resource identifier with a component identifier. In block 1008, the method may include generating an LLP association section table that associates the component identifier with an index. In block 1010, the method may include causing transmission of the layer one parameters, the electronic service guide table, the service association table, and the LLP association section table to a receiver.

Figure 11 illustrates an example method for processing of signaling parameters to decode PLPs. The method may be implemented, for example, by a receiver, such as, but not limited to, mobile communication device 105, mobile phone 110, personal digital assistant (PDA) or mobile computer 120, and personal computer (PC) 115 depicted in FIG. 1 and/or network devices 405 - cell phone 405a, computer 405b and set-top box 405c - depicted in FIG. 4. In block 1102, the method may include processing, by a processor, an electronic service guide table to identify a uniform resource identifier associated with a service. In block 1104, the method may include processing a service association table to identify a component identifier associated with the uniform resource identifier. In block 1106, the method may include processing an LLP association section table to identify an index associated with the component identifier. In block 1108, the method may include identifying a physical location of a sub physical layer pipe within a physical layer pipe of an LLP frame using the index. In block 1110, the method may include processing layer one parameters of the LLP frame to identify decoding parameters of the sub physical layer pipe. Examples of decoding parameters may include the parameters discussed with reference to Figures 6, 7a-b, and 8a-b. In block 1102, the method may include decoding the sub physical layer pipe using the decoding parameters.

Any of the method steps, operations, procedures or functions described herein may be implemented using one or more processors in combination with executable instructions that cause the processors and other components to perform the method steps, procedures or functions. As used herein, the terms "processor"/ "controller" and "computer" whether used alone or in combination with executable instructions stored in a memory or other computer-readable storage medium should be understood to encompass any of various types of well-known computing structures including but not limited to one or more microprocessors, special-purpose computer chips, field-programmable gate arrays (FPGAs), controllers, application-specific integrated circuits (ASICs), combinations of hardware/firmware/software, or other special or general-purpose processing circuitry.

The methods and features recited herein may further be implemented through any number of computer readable media that are able to store computer readable instructions. Examples of computer readable media that may be used include RAM, ROM, EEPROM, flash memory or other memory technology, CD-ROM, DVD or other optical disk storage, magnetic cassettes, magnetic tape, magnetic storage and the like.

Additionally or alternatively, in at least some embodiments, the methods and features recited herein may be implemented through one or more integrated circuits (ICs). An integrated circuit may, for example, be a microprocessor that accesses programming instructions or other data stored in a read only memory (ROM). In some such embodiments, the ROM stores programming instructions that cause the IC to perform operations according to one or more of the methods described herein. In at least some other embodiments, one or more the methods described herein are hardwired into an IC. In other words, the IC is in such cases an application specific integrated circuit (ASIC) having gates and other logic dedicated to the calculations and other operations described herein. In still other embodiments, the IC may perform some operations based on execution of programming instructions read from ROM or RAM, with other operations hardwired into gates and other logic of IC. Further, the IC may output image data to a display buffer.

Although specific examples of carrying out the invention have been described, those skilled in the art will appreciate that there are numerous variations and permutations of the above-described systems and methods that are contained within the spirit and scope of the invention as set forth in the appended claims. Additionally, numerous other embodiments, modifications and variations within the scope and spirit of the appended claims will occur to persons of ordinary skill in the art from a review of this disclosure.

## Claims

1. A method comprising:
transmitting in a digital broadcast network a first signalling information table comprising service information and at least one second signalling information table comprising multiplex information;
identifying in the service information one or more components of the services by uniform resource identifiers;
assigning in the service information one or more component identifiers for the uniform resource identifiers, wherein the one or more component identifiers have a shorter length than the uniform resource identifiers; and
identifying the components of the services in the second signalling information table using the assigned component identifiers.

2. The method of claim 1, wherein the multiplex information provides a mapping between the component identifier and a physical layer pipe with a signalled location in a time division multiplex structure.

3. The method of claim 2, wherein the multiplex information provides a mapping between the component identifier and an index indicating a location inside the physical layer pipe.

4. The method of any of claims 1 to 3, wherein the service information comprises a mapping between the uniform resource identifier and a link layer identifier.

5. A method comprising:
receiving from a digital broadcast network a first signalling information table comprising service information and at least one second signalling information table comprising multiplex information;
detecting from the first signalling information table a uniform resource identifier corresponding to a component of a service;
detecting from the first signalling table a component identifier corresponding to the uniform resource identifier, wherein the component identifier has a shorter length than the uniform resource identifier; and
detecting multiplexing information from the second signalling information table using the component identifier.

6. The method of claim 5, wherein the multiplex information provides a mapping between the component identifier and a physical layer pipe with a signalled location in a time division multiplex structure.

7. The method of claim 6, wherein the multiplex information provides a mapping between the component identifier and an index indicating a location inside the physical layer pipe

8. The method of any of claims 5 to 7, wherein the service information comprises mapping between the uniform resource identifier and a link layer identifier.

9. An apparatus comprising
transmitting means for transmitting in a digital broadcast network a first signalling information table comprising service information and at least one second signalling information table comprising multiplex information;
means for identifying in the service information one or more components of the services by uniform resource identifiers;
means for assigning in the service information one or more component identifiers for the uniform resource identifiers, wherein the component identifiers have a shorter length than the uniform resource identifiers; and
means for identifying the components of the services in the second signalling information using the assigned component identifiers.

10. The apparatus of claim 9, wherein the multiplex information comprises a mapping between the component identifier and a physical layer pipe with a signalled location in a time division multiplex structure.

11. The apparatus of claim 10, wherein the multiplex information provides mapping between the component identifier and an index indicating a location inside the physical layer pipe.

12. The apparatus of any of claims 9 to 11, wherein the service information comprises mapping between the uniform resource identifier and a link layer identifier.

13. An apparatus comprising:
means for receiving from a digital broadcast network a first signalling information table comprising service information and at least one second signalling information table comprising multiplex information;
means for detecting from the first signalling information table a uniform resource identifier corresponding to a component of a service;
means for detecting from the first signalling table a component identifier corresponding to the uniform resource identifier, wherein the component identifier has a shorter length than the uniform resource identifier; and
means for detecting multiplexing information from the second signalling information table using the component identifier.

14. The apparatus of claim 13, wherein the multiplex information provides a mapping between the component identifier and a physical layer pipe with a signalled location in a time division multiplex structure.

15. The apparatus of any of claims 13 to 14, wherein the service information comprises mapping between the uniform resource identifier and a link layer identifier.
